# EUROPÄISCHE PATENTANMELDUNG

(11) **EP 3 995 343 A1**
(43) Veröffentlichungstag der Anmeldung: **11.05.2022**
(21) Anmeldenummer: 21205054.6
(22) Anmeldetag: 27.10.2021
(51) Int. Cl.: B60L 3/00, B60L 3/04

(54) **ELEKTRISCHE LADESTATION UND VERFAHREN ZUM DURCHFÜHREN EINES LADEVORGANGS IN EINER ELEKTRISCHEN LADESTATION**

(30) Priorität: 10.11.2020 DE 102020129575
(71) Anmelder: Innogy eMobility Solutions GmbH, 44139 Dortmund (DE)
(72) Erfinder: Kledewski, Ingo, 44319 Dortmund (DE); Skrbic, Srdan, 44265 Dortmund (DE)
(74) Vertreter: Gottschald Patentanwälte Partnerschaft mbB

(57) **Zusammenfassung**

Die Erfindung betrifft eine elektrische Ladestation (1) zum Laden eines elektrifizierten Fahrzeugs (20). Die Ladestation (1) weist einen ersten Mikrocontroller (3) auf, der dazu eingerichtet ist, zumindest eine sicherheitsunkritische Funktion der Ladestation (1) auszuführen. Außerdem weist die Ladestation (1) eine Schaltereinheit (5) auf, die derart eingerichtet ist, dass sie zugeschaltet und abgeschaltet werden kann, um einen Fluss von elektrischer Energie von einem an die Ladestation (1) angeschlossenen elektrischen Energienetz (19) zu dem Fahrzeug (20) zu ermöglichen und zu verhindern. Und die Ladestation (1) weist einen zweiten Mikrocontroller (4) auf, der kommunikationstechnisch mit dem ersten Mikrocontroller (3) verbunden ist und steuerungstechnisch mit der Schaltereinheit (5) verbunden ist, wobei der zweite Mikrocontroller (4) dazu eingerichtet ist, zumindest das Zuschalten der Schaltereinheit (5) als eine sicherheitskritische Funktion der Ladestation (1) auszuführen.

## Beschreibung

Die Erfindung betrifft eine elektrische Ladestation zum Laden eines elektrifizierten Fahrzeugs und ein Verfahren zum Durchführen eines Ladevorgangs in einer elektrischen Ladestation.

Aus dem Stand der Technik sind elektrische Ladestationen bekannt, in denen sicherheitskritische und sicherheitsunkritische Funktionen von einem Mikrocontroller ausgeführt werden. Von den Erfindern der vorliegenden Erfindung wurde erkannt, dass diese vermeintlich einfache Lösung der Bereitstellung sicherheitskritischer und sicherheitsunkritischer Funktionen durch den Mikrocontroller nachteilig sein kann.

Beispielsweise bestehen für sicherheitskritische Funktionen verschiedene Normen, die von der Ladestation bzw. dem Mikrocontroller erfüllt werden müssen. Die Entwicklung des Mikrocontrollers gestaltet sich vergleichsweise aufwendig und vor seinem Einsatz ist eine Zertifizierung der Normkonformität des Mikrocontrollers erforderlich. Nun hat sich gezeigt, dass eine Änderung sicherheitsunkritischer Funktionen des Mikrocontrollers einen erneuten Prozess einer aufwendigen Entwicklung und Zertifizierung des Mikrocontrollers der Ladestation anstößt, der entsprechend zeit- und kostenintensiv ist.

Es ist daher eine Aufgabe der Erfindung, eine kostengünstig und einfach entwickelbare Ladestation bereitzustellen.

Die voranstehende Aufgabe wird durch die Gegenstände der Patentansprüche, insbesondere durch eine elektrische Ladestation zum Laden eines elektrifizierten Fahrzeugs nach Anspruch 1 und ein Verfahren zum Durchführen eines Ladevorgangs in einer elektrischen Ladestation nach Anspruch 15 gelöst. Weitere Vorteile und Details der Erfindung ergeben sich aus den Unteransprüchen, der Beschreibung und den Zeichnungen. Dabei gelten Merkmale und Details, die im Zusammenhang mit der erfindungsgemäßen elektrischen Ladestation beschrieben sind, selbstverständlich auch im Zusammenhang mit dem erfindungsgemäßen Verfahren sowie jeweils umgekehrt, sodass bezüglich der Offenbarung zu den einzelnen Erfindungsaspekten stets wechselseitig Bezug genommen wird beziehungsweise werden kann.

Gemäß einem ersten Aspekt der Erfindung wird die Aufgabe gelöst durch eine elektrische Ladestation (im Folgenden verkürzt nur noch als Ladestation bezeichnet) zum Laden eines elektrifizierten Fahrzeugs (im Folgenden verkürzt nur noch als Fahrzeug bezeichnet). Die Ladestation weist einen ersten Mikrocontroller auf, der dazu eingerichtet ist, zumindest eine sicherheitsunkritische Funktion der Ladestation auszuführen. Die Ladestation weist ferner eine Schaltereinheit auf, die derart eingerichtet ist, dass sie zugeschaltet und abgeschaltet werden kann, um einen Fluss von elektrischer Energie von einem an die Ladestation angeschlossenen elektrischen Energienetz zu dem Fahrzeug zu ermöglichen und zu verhindern. Und die Ladestation weist einen zweiten Mikrocontroller auf, der kommunikationstechnisch mit dem ersten Mikrocontroller verbunden ist und steuerungstechnisch mit der Schaltereinheit verbunden ist, wobei der zweite Mikrocontroller dazu eingerichtet ist, zumindest das Zuschalten der Schaltereinheit als eine sicherheitskritische Funktion der Ladestation auszuführen.

Entsprechend wird die Aufgabe durch das Bereitstellen der unterschiedlichen Typen von Funktionen, nämlich einerseits der zumindest einen sicherheitsunkritischen Funktion und andererseits der zumindest einen sicherheitskritischen Funktion des Zuschaltens der Schaltereinheit, auf unterschiedlichen Mikrocontrollern bereitgestellt, die entsprechend miteinander und einer Schaltereinheit der elektrischen Ladestation verbunden sind. Die Mikrocontroller können alternativ auch als CPUs bezeichnet werden.

Wenn der zweite Mikrocontroller einmal entwickelt und zertifiziert ist, muss er bei Aktualisierung von sicherheitsunkritischen Funktionen des oder neuer Entwicklung des ersten Mikrocontrollers bzw. einer darauf befindlichen Software nicht neu zertifiziert werden, da der zweite Mikrocontroller, der die sicherheitskritische Funktion ausübt, nicht verändert wird. Dies erlaubt es, dass eine Änderung des ersten Mikrocontrollers hinsichtlich der von ihm ausgeführten zumindest einen sicherheitsunkritischen Funktion kostengünstig und einfach realisierbar ist, da der zweite Mikrocontroller unverändert bleiben kann und nicht neu zertifiziert werden muss.

Dass der erste Mikrocontroller dazu eingerichtet ist, zumindest eine sicherheitsunkritische Funktion der Ladestation auszuführen, bedeutet, dass der erste Mikrocontroller dazu eingerichtet sein kann, mehrere sicherheitsunkritische Funktionen der Ladestation auszuführen. Insbesondere kann der erste Mikrocontroller aller sicherheitsunkritischen Funktionen der Ladestation ausführen, während der zweite Mikrocontroller nur die zumindest eine oder mehrere oder alle sicherheitskritischen Funktionen der Ladestation ausführen kann. Entsprechend kann der zweite Mikrocontroller dazu eingerichtet sein, mehrere oder alle sicherheitskritischen Funktionen der Ladestation auszuführen. So kann der zweite Mikrocontroller selbstverständlich dazu eingerichtet sein, auch das Abschalten der Schaltereinheit als eine sicherheitskritische Funktion der Ladestation auszuführen. Die Einrichtung der Mikrocontroller zur Ausführung der jeweiligen Funktionen kann beispielsweise durch eine entsprechende Software bzw. ein entsprechendes Computerprogramm erfolgen, das auf jeweiligen Datenspeichern der Mikrocontroller oder auf einem gemeinsamen Datenspeicher der Mikrocontroller gespeichert sein kann und von diesen ausgeführt werden kann.

Die Ladestation kann als eine Wechselstromladestation und/oder eine Gleichstromladestation ausgebildet sein. Als Wechselstromladestation ausgebildet kann die Schaltereinheit zumindest ein Relais umfassen. Als Gleichstromladestation ausgebildet kann die Schaltereinheit einen Gleichrichter umfassen.

Als sicherheitskritische Vorgänge werden insbesondere Vorgänge verstanden, die während einem Ladevorgang oder für einen Ladevorgang ausgeführt werden und kritisch für die Sicherheit des Nutzers der Ladestation sind. Ein sicherheitskritischer Vorgang ist beispielsweise die Überprüfung der Funktionalität der Schaltereinheit, insbesondere, ob die Schaltereinheit einen Stromfluss erfolgreich trennen kann, sein. Auch die Überwachung von elektrischen Größen, insbesondere die Detektion eines Überstroms und/oder einer Überspannung ist ein sicherheitskritischer Vorgang. Ferner ist auch das Schließen bzw. Zuschalten der Schaltereinheit, nur, wenn zumindest ein an die Ladestation angeschlossenes Fahrzeug detektiert wurde, ein solcher sicherheitskritischer Vorgang. Zudem sind auch die Detektion eines Fehlerstroms und die Überwachung einer Temperatur der Ladestation derartige sicherheitskritische Vorgänge.

Als sicherheitsunkritische Funktionen werden hingegen solche Vorgänge verstanden, die nicht sicherheitskritisch sind. Insbesondere sind sicherheitsunkritische Funktionen damit solche, die während eines Ladevorgangs oder außerhalb eines Ladevorgangs ausgeführt werden und unkritisch für die Sicherheit des Nutzers der elektrischen Ladestation sind. Beispiele solcher sicherheitsunkritischen Funktionen sind eine Kommunikation der Ladestation mit einer IT-Infrastruktur bzw. einem Backend, die Messung einer übertragenen elektrischen Energie, eine Nutzerauthentifizierung, das Durchführen einer Fahrzeugkommunikation und das Durchführen eines Lastmanagements.

Das elektrifizierte Fahrzeug, das von der elektrischen Ladestation geladen werden bzw. mit elektrischer Energie versorgt werden kann, kann prinzipiell jedes beliebige Fahrzeug sein, welches mit elektrischer Energie zum Zwecke des Antriebs des Fahrzeugs versorgt werden kann. Typischerweise weisen derartige Fahrzeuge Traktionsbatterien auf, die die elektrische Energie für den Antrieb der Fahrzeuge speichern. Beispielsweise kann es sich um Elektrofahrzeuge, also rein batterieelektrisch betriebene Fahrzeuge, oder Plug-In HybridFahrzeuge handeln, die neben einem batterieelektrischen Antrieb mit einer entsprechenden Traktionsbatterie einen weiteren Antrieb, beispielsweise einen Verbrennungsmotor, aufweisen.

Es kann vorgesehen sein, dass der zweite Mikrocontroller und die Schaltereinheit auf einer gemeinsamen elektrischen Leiterplatte angeordnet sind. Dadurch kann vorteilhafterweise eine für eine Zertifizierung durchzuführende Risikoanalyse einfacher durchführbar sein.

Auch kann vorgesehen sein, dass der erste Mikrocontroller und der zweite Mikrocontroller auf einer gemeinsamen elektrischen Leiterplatte angeordnet sind. Auch dadurch kann vorteilhafterweise eine für eine Zertifizierung durchzuführende Risikoanalyse einfacher durchführbar sein. Insbesondere kann vorgesehen sein, dass der erste Mikrocontroller, der zweite Mikrocontroller und die Schaltereinheit auf einer bzw. derselben gemeinsamen elektrischen Leiterplatte angeordnet sind. Auch weitere Komponenten der Ladestation, wie sie nachstehend noch ausführlich erläutert werden, können auf der gemeinsamen bzw. einer einzigen elektrischen Leiterplatte angeordnet sein, um die Zertifizierung zu vereinfachen.

Ferner kann vorgesehen sein, dass nur der zweite Mikrocontroller dazu eingerichtet ist, die Schaltereinheit zuzuschalten. Mit anderen Worten kann weder der erste Mikrocontroller noch eine andere Komponente der Ladestation die Schaltereinheit zuschalten. Mit anderen Worten kann vorgesehen sein, dass nur der zweite Mikrocontroller einen vollen Steuerzugriff auf die Schaltereinheit hat. Der volle Steuerzugriff erfordert bzw. ermöglicht ein Ab- und Zuschalten der Schaltereinheit. Dadurch wird vorteilhafterweise vermieden, dass die besonders sicherheitskritische Funktion des Ermöglichens des Flusses von elektrischer Energie von dem elektrischen Energienetz zu dem Fahrzeug von einer anderen Komponente als dem zweiten Mikrocontroller ausgeführt werden kann, der hierfür normgerecht zertifiziert worden ist.

Jedoch kann vorgesehen sein, dass der erste Mikrocontroller zum Abschalten der Schaltereinheit eingerichtet ist. Insofern ist es möglich, dass der erste Mikrocontroller nicht nur sicherheitsunkritische Funktionen ausführen kann, wenn auch dies alternativ möglich ist, sondern zumindest auch das Abschalten der Schaltereinheit als zumindest eine sicherheitskritische Funktion ausführen kann. Dadurch kann der erste Mikrocontroller eine Rückfalllösung für einen Fall bieten, dass der Ladevorgang nicht sicher betrieben wird und beendet werden muss.

Weiterhin kann vorgesehen sein, dass der zweite Mikrocontroller zum Verarbeiten eines Control-Pilot-Signals von dem an die elektrische Ladestation angeschlossenen Fahrzeug eingerichtet ist. Entsprechend kann der zweite Mikrocontroller eine Control-Pilot-Leitung zu einem Anschluss der Ladestation für einen Ladestecker eines Ladekabels, mittels dem eine Verbindung zum Durchführen des Ladevorgangs zwischen der Ladestation und dem Fahrzeug hergestellt werden kann, aufweisen. Insbesondere kann der zweite Mikrocontroller zum Überwachen des Control-Pilot-Signals ausgebildet sein. Das Control-Pilot-Signal ist dazu ausgebildet, einen Ladestrom für den Ladevorgang zu regeln. Zusätzlich kann über das Control-Pilot-Signal detektiert werden, ob ein Fahrzeug an der Ladestation angeschlossen ist, da dieses dann das Control-Pilot-Signal an die Ladestation und damit den zweiten Mikrocontroller überträgt. Durch die Verarbeitung bzw. Überwachung des Control-Pilot-Signals wird es möglich, dass der zweite Mikrocontroller selbständig den Ladestrom für den Ladevorgang steuern kann. Es ist ferner möglich, dass der zweite Mikrocontroller dazu eingerichtet ist, das Control-Pilot-Signal zu kontrollieren. Wenn beispielsweise seitens des zweiten Mikrocontrollers ein unsicherer Zustand detektiert wird, kann dies über die Control-Pilot-Leitung dem an die Ladestation angeschlossenen Fahrzeug mitgeteilt werden. Das Sicherheitsniveau der Ladestation kann folglich insgesamt erhöht werden.

Darüber hinaus kann vorgesehen sein, dass die elektrische Ladestation ferner einen Fehlerstromsensor aufweist, der mit dem zweiten Mikrocontroller verbunden ist, und wobei der zweite Mikrocontroller zum Abschalten der Schaltereinheit bei Feststellen eines Fehlerstroms durch den Fehlerstromsensor eingerichtet ist. Für die Feststellung eines Fehlerstroms auf Basis der Messwerte des Fehlerstromsensors kann die Ladestation, insbesondere der zweite Mikrocontroller, eine Auswerteeinheit aufweisen. Bevorzugt ist dabei, dass der zweite Mikrocontroller die Auswerteinheit aufweist, da Fehlerstromsensoren mit Auswerteinheiten in der Anschaffung teuer sind. Der Fehlerstromsensor kann beispielsweise ein Hallsensor sein. Der Fehlerstromsensor kann insbesondere auf der zuvor bereits erwähnten gemeinsamen elektrischen Leiterplatte der Ladestation angeordnet werden. Die Auswerteeinheit kann Messwerte des Fehlerstromsensors auswerten, um einen Fehlerstrom festzustellen. Wenn nun ein Fehlerstrom festgestellt wird, kann der zweite Mikrocontroller, insbesondere komplett selbständig, also insbesondere unabhängig von dem ersten Mikrocontroller, die Schaltereinheit für den Ladestrom öffnen bzw. abschalten.

Zudem kann vorgesehen sein, dass die elektrische Ladestation einen mit dem zweiten Mikrocontroller verbundenen Temperatursensor aufweist, der dazu eingerichtet ist, eine Betriebstemperatur der elektrischen Ladestation zu erfassen, und wobei der zweite Mikrocontroller zum Abschalten der Schaltereinheit bei Messen einer Betriebstemperatur oberhalb eines vordefinierten Grenzwerts eingerichtet ist. Entsprechend kann der zweite Mikrocontroller selbständig feststellen, ob die Betriebstemperatur überhöht ist bzw. den vordefinierten Grenzwert überschreitet, um die Schaltereinheit abzuschalten und den Ladevorgang zu unterbrechen. Dadurch kann ein sicherer Zustand eingeleitet werden, während dem die Ladestation abkühlen kann, bevor es zu einer von der Ladestation ausgehenden Gefährdung kommen kann.

Vorgesehen sein kann auch, dass der erste Mikrocontroller mittels einer I²C-Bus-Kommunikationsverbindung mit dem zweiten Mikrocontroller verbunden ist. Eine solche kann besonders leicht implementiert werden. Ein übergeordnetes Protokoll, wie TCP, wird bei einer I²C-Bus-Kommunikationsverbindung nämlich nicht benötigt. Alternativ kann die (später lediglich zur Unterscheidung von weiteren möglichen Kommunikationsverbindungen zwischen den Mikrocontrollern als erste betitelte) Kommunikationsverbindung zwischen dem ersten Mikrocontroller und dem zweiten Mikrocontroller mittels CAN-Bus implementiert werden, was eine besonders robuste Lösung darstellt. Dies würde zudem ermöglichen, dass die Kommunikationsverbindung über mehrere elektrische Leiterplatten durchgeführt werden kann.

Ferner kann vorgesehen sein, dass jeweils der erste Mikrocontroller und der zweite Mikrocontroller mit einer Messeinheit zum Überwachen einer Spannung und/oder eines Stroms der während des Ladevorgangs übertragenen elektrischen Energie eingerichtet ist. Der zweite Mikrocontroller kann dabei dazu eingerichtet sein, die Spannung und/oder den Strom zu überwachen und der erste Mikrocontroller kann dazu eingerichtet sein, die übertragene Energie zu berechnen. Dadurch können vorteilhafterweise ein Sicherheitsaspekt, nämlich die Überwachung von Spannung und/oder Strom, und ein praktischer Aspekt für eine kontrollierte Berechnung bzw. Abrechnung der übertragenen Energie simultan erfüllt werden.

Weiterhin kann vorgesehen sein, dass der erste Mikrocontroller mittels einer ersten Kommunikationsverbindung kommunikationstechnisch mit dem zweiten Mikrocontroller verbunden ist und der erste Mikrocontroller ferner mittels einer zweiten Kommunikationsverbindung kommunikationstechnisch mit dem zweiten Mikrocontroller verbunden ist, wobei der erste Mikrocontroller dazu eingerichtet ist, mittels der zweiten Kommunikationsverbindung ein Signal an den zweiten Mikrocontroller zu übertragen, welches dazu eingerichtet ist, den zweiten Mikrocontroller neu zu starten und/oder zurückzusetzen. Dadurch wird eine separate Kommunikationsverbindung, namentlich die zweite Kommunikationsverbindung, zum Neustarten und/oder Zurücksetzen (auch Resetten), insbesondere auf den Werkszustand, des zweiten Mikrocontrollers bereitgestellt. Entsprechend kann der erste Mikrocontroller vorteilhafterweise als ein sogenannten externer Watchdog für den zweiten Mikrocontroller fungieren. Bei der ersten Kommunikationsverbindung kann es sich dabei um die bereits zuvor beschriebene I²C-Bus-Kommunikationsverbindung handeln. Der erste Mikrocontroller kann dabei dazu eingerichtet sein, mittels der ersten Kommunikationsverbindung zyklische Datennachrichten von dem zweiten Mikrocontroller an den ersten Mikrocontroller zu übertragen. Diese Datennachrichten können dem ersten Mikrocontroller signalisieren, dass eine Software auf dem zweiten Mikrocontroller in einem definierten Zustand bzw. korrekt ausgeführt wird. Für den Fall, dass keine Datennachrichten mehr von dem ersten Mikrocontroller empfangen werden (was darauf schließen lässt, dass der definierte Zustand nicht mehr herrscht) kann vorgesehen sein, dass der erste Mikrocontroller den zweiten Mikrocontroller mittels des über die zweite Kommunikationsverbindung übertragbaren Signals neustartet und/oder zurücksetzt, um den zweiten Mikrocontroller in den definierten Zustand zurückzuführen bzw. wieder korrekt arbeiten zu lassen. Dadurch wird die Betriebssicherheit der Ladestation erhöht.

Zudem kann vorgesehen sein, dass der erste Mikrocontroller zur Überwachung der Versorgungsspannung und/oder des Versorgungsstroms des zweiten Mikrocontrollers eingerichtet ist. Zur Überwachung kann eine dritte Kommunikationsverbindung zwischen dem ersten Mikrocontroller und dem zweiten Mikrocontroller angeordnet sein. Entsprechend kann vorgesehen sein, dass der erste Mikrocontroller den zweiten Mikrocontroller neustartet und/oder zurücksetzt, insbesondere mittels des zuvor erläuterten Signals via der zweiten Kommunikationsverbindung, wenn die Versorgungsspannung und/oder der Versorgungsstrom unter einen definierten unteren Grenzwert sinkt und/oder über einen definierten oberen Grenzwert steigt. Dadurch wird die Betriebssicherheit der Ladestation erhöht.

Außerdem kann vorgesehen sein, dass der zweite Mikrocontroller zwei seriell verschaltete Ausgänge zum Steuern der Schaltereinheit aufweist, wobei beide Ausgänge des zweiten Mikrocontrollers aktiviert sein müssen, damit die Schaltereinheit zugeschaltet wird. Folglich ist die Schaltereinheit deaktiviert bzw. abgeschaltet, wenn einer der beiden Ausgänge des zweiten Mikrocontrollers deaktiviert ist. In dem aktivierten Zustand der Ausgänge können jedoch entsprechende Signale zum Zuschalten der Schaltereinheit über eine entsprechende Steuerleitung zwischen dem zweiten Mikrocontroller und der Schaltereinheit übertragen werden. Durch die serielle Verschaltung mit zwei Ausgängen ist es vorteilhafterweise möglich, dass die Ausgänge separat getestet werden können.

Schließlich kann vorgesehen sein, dass der zweite Mikrocontroller auf einer 8-Bit- oder 16-Bit-Architektur basiert. Da der zweite Mikrocontroller sicherheitskritische Funktionen ausführt wird keine hohe Rechenleistung des zweiten Mikrocontrollers benötigt. Die 8-Bit- oder 16-Bit-Architektur für den zweiten Mikrocontroller, die vergleichsweise günstig ist, kann daher für den zweiten Mikrocontroller genügen, was die Kosten der Ladestation senkt. Vorgesehen sein kann zudem, dass der erste Mikrocontroller eine andere Architektur als der zweite Mikrocontroller, insbesondere in Richtung höherer Rechenleistung aufweist, um sicherheitsunkritische Funktionen, die einen höheren Rechenaufwand aufweisen, durchführen zu können.

Gemäß einem zweiten Aspekt der Erfindung wird die eingangs erwähnte Aufgabe gelöst durch ein Verfahren zum Durchführen eines Ladevorgangs in einer elektrischen Ladestation nach dem ersten Aspekt der Erfindung, wobei das Verfahren die Schritte aufweist:
(a) Senden eines Befehls über den vorzunehmenden Ladevorgang von dem ersten Mikrocontroller an den zweiten Mikrocontroller,
(b) Überprüfen, insbesondere mittels des zweiten Mikrocontrollers, ob ein sicherer Zustand vorliegt, und
(c) Zuschalten der Schaltereinheit mittels des zweiten Mikrocontrollers, wenn die Überprüfung ergeben hat, dass ein sicherer Zustand vorliegt, um den Ladevorgang durchzuführen.

Ein sicherer Zustand liegt vor, wenn ein Ladevorgang ohne Sicherheitsgefährdung durchgeführt werden kann. Anderenfalls liegt ein unsicherer Zustand vor. Entsprechend kann im Zusammenspiel von dem ersten Mikrocontroller und dem zweiten Mikrocontroller ein sicherer Ladevorgang bei Ausführung der Schritte des erfindungsgemäßen Verfahrens durchgeführt werden. Für die Ermittlung des Zustands kann beispielsweise auf die zuvor erwähnten Komponenten wie Fehlerstromsensor, Temperatursensor und Messeinheit bzw. ihre Messwerte und auch auf Daten vom Fahrzeug zurückgegriffen werden.

Es kann vorgesehen sein, dass das Verfahren ferner die Schritte aufweist:
- Überwachen eines sicheren Zustands während des Ladevorgangs bei zugeschalteter Schaltereinheit, insbesondere mittels des zweiten Mikrocontrollers, und
- Abschalten der Schaltereinheit, insbesondere mittels des zweiten Mikrocontrollers oder des ersten Mikrocontrollers, wenn die Überwachung ergibt, dass während des Ladevorgangs kein sicherer Zustand vorliegt.

Demgemäß kann der Ladevorgang durch die Überwachung auch nach seinem Beginn sicher betrieben werden, da ein unsicherer Zustand auch nach dem Beginn des Ladevorgangs bestimmt werden kann, um den Ladevorgang entsprechend zu beenden.

Weitere, die Erfindung verbessernde Maßnahmen ergeben sich aus der nachfolgenden Beschreibung zu verschiedenen Ausführungsbeispielen der Erfindung, welche in den Figuren schematisch dargestellt sind. Sämtliche aus den Ansprüchen, der Beschreibung oder den Figuren hervorgehende Merkmale und/oder Vorteile, einschließlich konstruktiver Einzelheiten und räumlicher Anordnungen können sowohl für sich als auch in den verschiedenen Kombinationen erfindungswesentlich sein.

Anhand der beigefügten Zeichnungen wird die Erfindung nachfolgend näher erläutert. Dabei zeigen:
- Fig. 1: eine schematische Darstellung eines ersten Ausführungsbeispiels einer erfindungsgemäßen elektrischen Ladestation;
- Fig. 2: eine schematische Darstellung eines zweiten Ausführungsbeispiels einer erfindungsgemäßen elektrischen Ladestation;
- Fig. 3: eine schematische Darstellung eines dritten Ausführungsbeispiels einer erfindungsgemäßen elektrischen Ladestation;
- Fig. 4: einen Ausschnitt eines vierten Ausführungsbeispiels einer elektrischen Ladestation in einer schematischen Darstellung mit einem elektrischen Energienetz und elektrifizierten Fahrzeug; und
- Fig. 5: eine schematische Darstellung eines Ausführungsbeispiels eines erfindungsgemäßen Verfahrens.

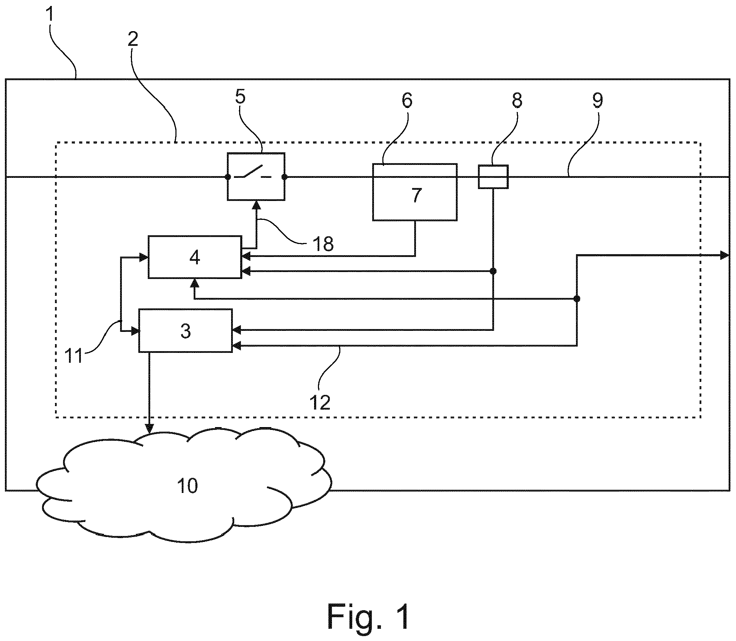

Elemente mit gleicher Funktion und Wirkungsweise sind in den Figuren 1 bis 5 jeweils mit denselben Bezugszeichen versehen.

Figur 1 zeigt eine elektrische Ladestation 1 gemäß einem ersten Ausführungsbeispiel der Erfindung. Die Ladestation 1 weist einen ersten Mikrocontroller 3 auf, der dazu eingerichtet ist, sicherheitsunkritische Funktionen auszuführen. Die sicherheitsunkritischen Funktionen können beispielsweise in einer Außenkommunikation 10 bzw. Kommunikation mit der Außenwelt, beispielsweise über ein Open Charge Point Protocol (OCPP), bestehen bzw. eine solche umfassen.

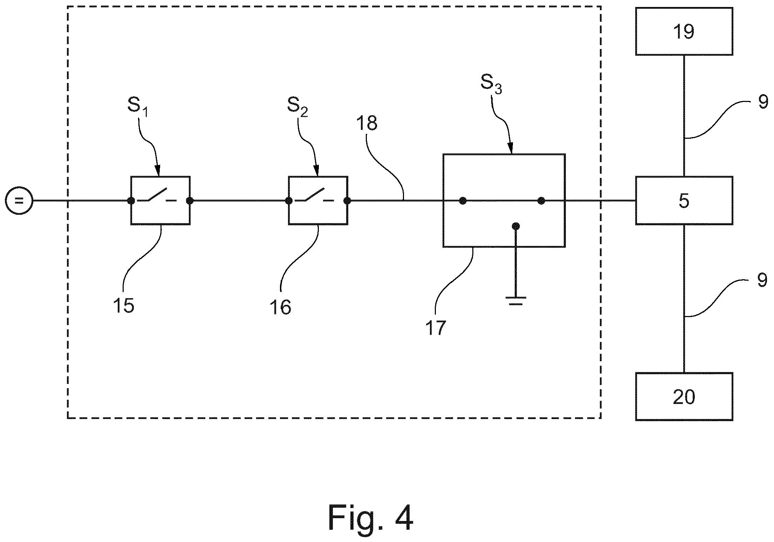

Ferner weist die elektrische Ladestation 1 einen zweiten Mikrocontroller 4 auf, der dazu eingerichtet ist, zumindest das Zuschalten einer Schaltereinheit 5 der Ladestation 1 als eine sicherheitskritische Funktion der Ladestation 1 auszuführen. Die Schaltereinheit 5 ist dabei dazu eingerichtet, dass sie zugeschaltet und abgeschaltet werden kann, um einen Fluss von elektrischer Energie von einem an die Ladestation 1 angeschlossenen elektrischen Energienetz 19 zu dem Fahrzeug 20 (siehe Fig. 4) zu ermöglichen und zu verhindern. Dazu ist die Schaltereinheit 5 in einer Stromleitung 9 der Ladestation 1 zwischen dem Energienetz 19 und dem Fahrzeug 20 angeordnet. Ferner ist die Schaltereinheit 5 mit dem zweiten Mikrocontroller 4 über eine Steuerleitung 18 verbunden, mittels derer der zweite Mikrocontroller 4 die Schaltereinheit 5 zu- und abschalten kann.

Möglich ist zudem, dass der erste Mikrocontroller 3 dazu eingerichtet ist, zumindest das Abschalten der Schaltereinheit 5 zu bewirken. Hierzu weist die Ladestation 1 eine erste Kommunikationsverbindung 11 auf, die beispielsweise als I²C-Kommunikationsverbindung 11 ausgebildet sein kann und die den ersten Mikrocontroller 3 mit dem zweiten Mikrocontroller 4 verbindet.

Die Ladestation 1 weist ferner eine elektrische Leiterplatte 2 auf. Auf der elektrischen Leiterplatte 2 befinden sich der erste Mikrocontroller 3, der zweite Mikrocontroller 4 und die Schaltereinheit 5. Ferner befinden sich zumindest auch ein Fehlerstromsensor 6, eine Auswerteeinheit 7 des Fehlerstromsensors 6 und eine Messeinheit 8 auf der elektrischen Leiterplatte 2 der Ladestation 1 aus Fig. 1.

Die Messungen des Fehlerstromsensors 6 des fließenden Stroms in der Stromleitung 9 während eines Ladevorgangs können von der Auswerteinheit 7 ausgewertet werden, um einen Fehlerstrom zu detektieren. Wenn ein Fehlerstrom detektiert wird, kann der zweite Mikrocontroller 4 die Schaltereinheit 5 abschalten, um den Stromfluss von dem elektrischen Energienetz 19 an das Fahrzeug 20 zu unterbrechen und so einen sicheren Zustand herbeiführen.

Mittels entsprechender (nicht bezeichneter Verbindungen) der Messeinheit 8 mit dem ersten Mikrocontroller 3 und dem zweiten Mikrocontroller 4 können eine Spannung und ein Strom der während des Ladevorgangs übertragenen elektrischen Energie überwacht werden. Sofern hier vordefinierte Grenzwerte für Spannung oder Strom überschritten oder unterschritten werden, kann die Schaltereinheit 5 von dem zweiten Mikrocontroller 4 oder dem ersten Mikrocontroller 3 abgeschaltet werden, um eine Sicherheitsgefährdung auszuschließen.

Auch eine Control-Pilot-Leitung 12 befindet sich auf der elektrischen Leiterplatte 2, die den ersten Mikrocontroller 3 mit dem Fahrzeug 20 mittels eines nicht gezeigten Ladekabels verbindet. Entsprechend kann der erste Mikrocontroller 3 Control-Pilot-Signale von der Control-Pilot-Leitung 12 überwachen.

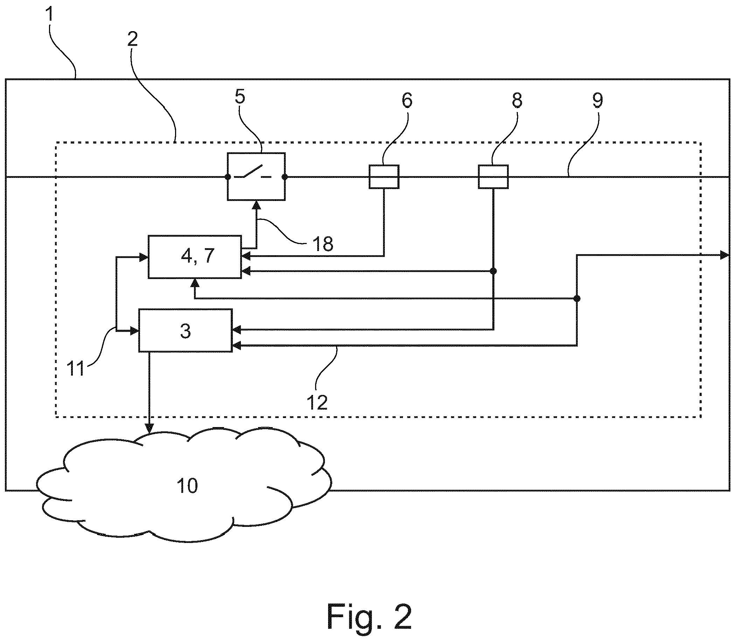

Figur 2 zeigt eine alternative Ausführungsform der Ladestation 1 der Fig. 1 mit dem Unterschied, dass die Auswerteinheit 7 nicht in den Fehlerstromsensor 6, sondern den zweiten Mikrocontroller 4 integriert ist, was die Herstellung einer kostengünstigeren Ladestation 1 erlaubt.

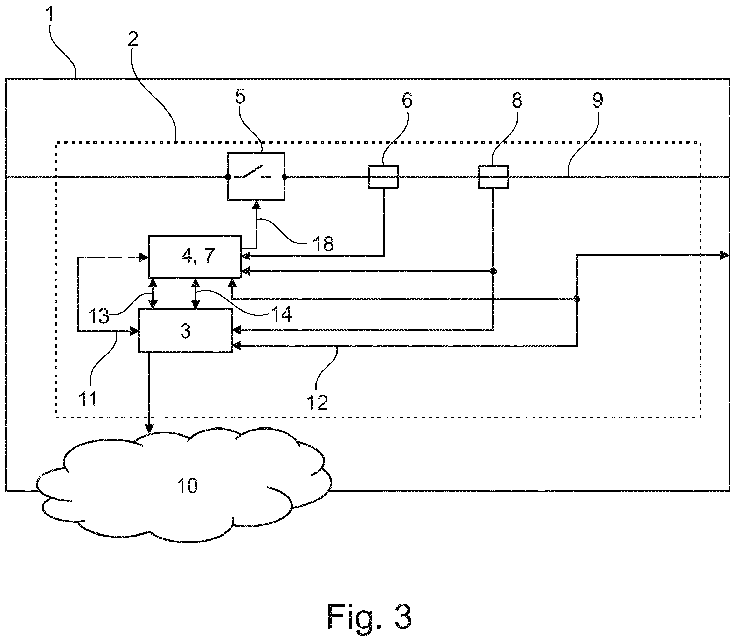

Figur 3 zeigt eine noch weitere alternative Ausführungsform der Ladestation 1 der Fig. 1, die zwei zusätzliche Kommunikationsverbindungen 13, 14 aufweist, die jeweils den ersten Mikrocontroller 3 mit dem zweiten Mikrocontroller 4 verbinden.

Mittels der ersten Kommunikationsverbindung 13 kann der erste Mikrocontroller 3 ein Signal an den zweiten Mikrocontroller 4 übertragen, welches den zweiten Mikrocontroller 4 neustartet oder zurücksetzt.

Mittels der dritten Kommunikationsverbindung 14 kann der erste Mikrocontroller 3 die Versorgungsspannung und den Versorgungsstrom des zweiten Mikrocontrollers 4 überwachen, um bei Bedarf einen Neustart oder eine Zurücksetzung des ersten Mikrocontrollers 3 mittels der zweiten Kommunikationsverbindung 13 zu bewirken.

Figur 4 zeigt einen Ausschnitt einer Ladestation 1, die ein weiteres viertes Ausführungsbeispiel bildet, jedoch aber auch gemäß einem der Ausführungsbeispiele der Fig. 1 bis 3 ausgebildet sein kann. Der Ausschnitt zeigt Ausgänge 15, 16 der Mikrocontroller 3, 4, die mittels der Steuerleitung 18 steuerungstechnisch mit der Schaltereinheit 5 verbunden sind. Der erste Ausgang 15 und der zweite Ausgang 16 sind seriell verschaltete Ausgänge 15, 16 des zweiten Mikrocontrollers 4. Der dritte Ausgang 17 ist ein Ausgang 17 des ersten Mikrocontrollers 3.

Mittels der Ausgänge 15, 16, 17 sendet der jeweilige Mikrocontroller 3, 4 ein Signal s zum Abschalten oder Zuschalten der Schaltereinheit 5, damit elektrische Energie bzw. Strom von dem elektrischen Energienetz 19 zu dem elektrifizierten Fahrzeug 20 fließen kann oder nicht. Im Falle des zweiten Mikrocontrollers 4 müssen vorliegend beide Signale s₁, s₂ der Ausgänge 15, 16 des zweiten Mikrocontrollers 4 mittels der Steuerleitung 18 an die Schaltereinheit 5 gesendet werden, damit die Schaltereinheit 5 zugeschaltet wird und der Strom von dem elektrischen Energienetz 19 an das Fahrzeug 20 übertragen werden kann. Ein einziges der beiden Signale s₁, s₂ genügt nicht. Wenn das Signal s₃ des ersten Mikrocontrollers 3 zusätzlich über die Steuerleitung 18, beispielsweise mittels der ersten Kommunikationsverbindung 11 und des zweiten Mikrocontrollers 4, an die Schaltereinheit 5 übertragen wird, wird die Schaltereinheit 5 wieder abgeschaltet und es fließt kein Strom mehr von dem elektrischen Energienetz 19 an das Fahrzeug 20.

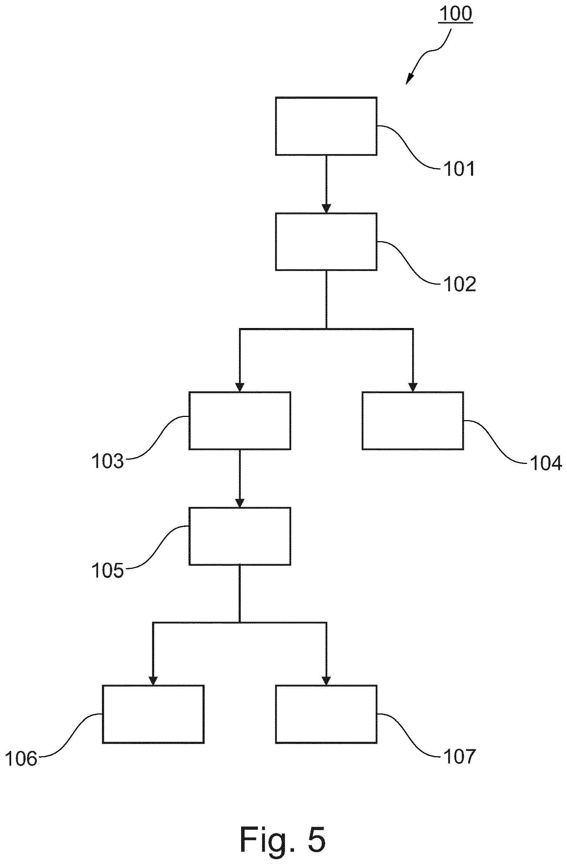

Figur 5 zeigt ein Ausführungsbeispiel eines erfindungsgemäßen Verfahrens 100, das in jedem der vorstehend beschriebenen Ladestationen 1 durchgeführt werden kann. In einem ersten Verfahrensschritt 101 werden Befehle über den vorzunehmenden Ladevorgang von dem ersten Mikrocontroller 3 an den zweiten Mikrocontroller 4 übertragen.

In einem zweiten Verfahrensschritt 102 wird mittels des zweiten Mikrocontrollers 4 geprüft, ob ein sicherer Zustand vorliegt. Sofern dies der Fall ist, wird in den dritten Verfahrensschritt 103 die Schaltereinheit 5 mittels des zweiten Mikrocontrollers 4 zugeschaltet. Anderenfalls wird in den vierten Verfahrensschritt 104 übergegangen, wonach die Schaltereinheit 5 abgeschaltet bleibt oder vorsichtshalber ein Signal zum Abschalten an die Schaltereinheit 5 gesendet werden kann.

Wenn die Schaltereinheit 5 in dem dritten Verfahrensschritt 103 zugeschaltet worden ist, wird in einem darauffolgenden fünften Verfahrensschritt 105 der sichere Zustand während des begonnen Ladevorgangs bei zugeschalteter Schaltereinheit 5 mittels des zweiten Mikrocontrollers 4 überwacht.

Wenn der sichere Zustand weiter vorliegt, kann der Ladevorgang solange weiter durchgeführt werden, bis er regulär in dem sechsten Verfahrensschritt 106 beendet wird, beispielsweise, weil das Fahrzeug 20 fertig geladen ist bzw. der Ladevorgang seitens des Fahrzeugnutzers des Fahrzeugs 20 beendet wird. Dazu kann die Schaltereinheit 5 abgeschaltet werden.

Wenn aber die in Verfahrensschritt 105 erfolgte Überwachung ergibt, dass sich ein unsicherer Zustand während des Ladevorgangs ereignet, wird die Schaltereinheit 5 in dem siebten Verfahrensschritt bereits vor der regulären Beendigung des Ladevorgangs abgeschaltet, um den Ladevorgang sicherheitshalber zu beenden.

### Bezugszeichenliste

- 1: Ladestation
- 2: Leiterplatte
- 3: erster Mikrocontroller
- 4: zweiter Mikrocontroller
- 5: Schaltereinheit
- 6: Fehlerstromsensor
- 7: Auswerteeinheit
- 8: Messeinheit
- 9: Stromleitung
- 10: Außenkommunikation
- 11: erste Kommunikationsverbindung, I²C-Kommunikationsverbindung
- 12: Control-Pilot-Leitung
- 13: zweite Kommunikationsverbindung
- 14: dritte Kommunikationsverbindung
- 15: erster Ausgang
- 16: zweiter Ausgang
- 17: dritter Ausgang
- 18: Steuerleitung
- 19: Energienetz
- 20: Fahrzeug
- 100: Verfahren
- 101... 107: Verfahrensschritte
- s: Signal

## Patentansprüche

1. Elektrische Ladestation (1) zum Laden eines elektrifizierten Fahrzeugs (20), wobei die Ladestation (1) aufweist:
(a) einen ersten Mikrocontroller (3), der dazu eingerichtet ist, zumindest eine sicherheitsunkritische Funktion der Ladestation (1) auszuführen,
(b) eine Schaltereinheit (5), die derart eingerichtet ist, dass sie zugeschaltet und abgeschaltet werden kann, um einen Fluss von elektrischer Energie von einem an die Ladestation (1) angeschlossenen elektrischen Energienetz (19) zu dem Fahrzeug (20) zu ermöglichen und zu verhindern, und
(c) einen zweiten Mikrocontroller (4), der kommunikationstechnisch mit dem ersten Mikrocontroller (3) verbunden ist und steuerungstechnisch mit der Schaltereinheit (5) verbunden ist, wobei der zweite Mikrocontroller (4) dazu eingerichtet ist, zumindest das Zuschalten der Schaltereinheit (5) als eine sicherheitskritische Funktion der Ladestation (1) auszuführen.

2. Elektrische Ladestation (1) nach Anspruch 1, wobei der zweite Mikrocontroller (4) und die Schaltereinheit (5) auf einer gemeinsamen elektrischen Leiterplatte (2) angeordnet sind.

3. Elektrische Ladestation (1) nach Anspruch 1 oder 2, wobei der erste Mikrocontroller (3) und der zweite Mikrocontroller (4) auf einer gemeinsamen elektrischen Leiterplatte (2) angeordnet sind, und/oder
nur der zweite Mikrocontroller (4) dazu eingerichtet ist, die Schaltereinheit (5) zuzuschalten.

4. Elektrische Ladestation (1) nach einem der voranstehenden Ansprüche, wobei der erste Mikrocontroller (3) zum Abschalten der Schaltereinheit (5) eingerichtet ist.

5. Elektrische Ladestation (1) nach einem der voranstehenden Ansprüche, wobei der zweite Mikrocontroller (4) zum Verarbeiten eines Control-Pilot-Signals von dem an die elektrische Ladestation (1) angeschlossenen Fahrzeug (20) eingerichtet ist.

6. Elektrische Ladestation (1) nach einem der voranstehenden Ansprüche, wobei die elektrische Ladestation (1) ferner einen Fehlerstromsensor (6) aufweist, der mit dem zweiten Mikrocontroller (4) verbunden ist, und wobei der zweite Mikrocontroller (4) zum Abschalten der Schaltereinheit (5) bei Feststellen eines Fehlerstroms durch den Fehlerstromsensor (6) eingerichtet ist.

7. Elektrische Ladestation (1) nach einem der voranstehenden Ansprüche, wobei die elektrische Ladestation (1) einen mit dem zweiten Mikrocontroller (4) verbundenen Temperatursensor aufweist, der dazu eingerichtet ist, eine Betriebstemperatur der elektrischen Ladestation (1) zu erfassen, und wobei der zweite Mikrocontroller (4) zum Abschalten der Schaltereinheit (5) bei Messen einer Betriebstemperatur oberhalb eines vordefinierten Grenzwerts eingerichtet ist.

8. Elektrische Ladestation (1) nach einem der voranstehenden Ansprüche, wobei der erste Mikrocontroller (3) mittels einer I²C-Bus-Kommunikationsverbindung (11) mit dem zweiten Mikrocontroller (4) verbunden ist.

9. Elektrische Ladestation (1) nach einem der voranstehenden Ansprüche, wobei jeweils der erste Mikrocontroller (3) und der zweite Mikrocontroller (4) mit einer Messeinheit (8) zum Überwachen einer Spannung und/oder eines Stroms der während des Ladevorgangs übertragenen elektrischen Energie eingerichtet ist.

10. Elektrische Ladestation (1) nach einem der voranstehenden Ansprüche, wobei der erste Mikrocontroller (3) mittels einer ersten Kommunikationsverbindung (11) kommunikationstechnisch mit dem zweiten Mikrocontroller (4) verbunden ist und der erste Mikrocontroller (3) ferner mittels einer zweiten Kommunikationsverbindung (13) kommunikationstechnisch mit dem zweiten Mikrocontroller (4) verbunden ist, wobei der erste Mikrocontroller (3) dazu eingerichtet ist, mittels der zweiten Kommunikationsverbindung (13) ein Signal an den zweiten Mikrocontroller (4) zu übertragen, welches dazu eingerichtet ist, den zweiten Mikrocontroller (4) neu zu starten und/oder zurückzusetzen.

11. Elektrische Ladestation (1) nach einem der voranstehenden Ansprüche, wobei der erste Mikrocontroller (3) zur Überwachung der Versorgungsspannung und/oder des Versorgungsstroms des zweiten Mikrocontrollers (4) eingerichtet ist.

12. Elektrische Ladestation (1) nach einem der voranstehenden Ansprüche, wobei der zweite Mikrocontroller (4) zwei seriell verschaltete Ausgänge (15, 16) zum Steuern der Schaltereinheit (5) aufweist, wobei beide Ausgänge (15, 16) des zweiten Mikrocontrollers (4) aktiviert sein müssen, damit die Schaltereinheit (5) zugeschaltet wird.

13. Elektrische Ladestation (1) nach einem der voranstehenden Ansprüche, wobei der zweite Mikrocontroller (4) auf einer 8-Bit- oder 16-Bit-Architektur basiert.

14. Verfahren (100) zum Durchführen eines Ladevorgangs in einer elektrischen Ladestation (1) nach einem der voranstehenden Ansprüche, wobei das Verfahren (100) die Schritte aufweist:
(a) Senden eines Befehls über den vorzunehmenden Ladevorgang von dem ersten Mikrocontroller (3) an den zweiten Mikrocontroller (4),
(b) Überprüfen, insbesondere mittels des zweiten Mikrocontrollers (4), ob ein sicherer Zustand vorliegt, und
(c) Zuschalten der Schaltereinheit (5) mittels des zweiten Mikrocontrollers (4), wenn die Überprüfung ergeben hat, dass ein sicherer Zustand vorliegt, um den Ladevorgang durchzuführen.

15. Verfahren (100) nach Anspruch 14, wobei das Verfahren (100) ferner die Schritte aufweist:
- Überwachen eines sicheren Zustands während des Ladevorgangs bei zugeschalteter Schaltereinheit (5), insbesondere mittels des zweiten Mikrocontrollers (4), und
- Abschalten der Schaltereinheit (5), wenn die Überwachung ergibt, dass während des Ladevorgangs kein sicherer Zustand vorliegt.
